# EUROPEAN PATENT APPLICATION

(11) **EP 4 659 954 A1**
(43) Date of publication of application: **10.12.2025**
(21) Application number: 24180600.9
(22) Date of filing: 06.06.2024
(51) Int. Cl.: B32B 27/38, B32B 7/12, B32B 11/04, B32B 25/04, B32B 25/08, B32B 25/16, B32B 27/06, B32B 27/08

(54) **METHOD FOR WATERPROOFING A SURFACE OF A SUBSTRATE**

(71) Applicant: Sika Technology AG, 6340 Baar (CH)
(72) Inventor: AXT, David, Goldendale, 98620 (US); TERRY, Darryl, Yucaipa, 92399 (US); JIANG, Xiong, Canton, 02021 (US); KORKOYAH, Murphy, North Attleboro, 02760 (US)
(74) Representative: Sika Patent Attorneys

(57) **Abstract**

The invention is directed to a method for waterproofing a surface of a substrate comprising steps of:
I) Applying an epoxy resin layer to at least a portion of the surface of the substrate,
II) Applying a sealing element comprising a polymeric waterproofing layer to the surface of the substrate such that the sealing element also covers the epoxy resin layer,
wherein at least a portion of the surface of the substrate covered with the epoxy resin layer contains bitumen- and/or ethylene propylene diene monomer (EPDM)-based material.

## Description

### Technical field

The invention relates to the field of waterproofing of above ground building constructions by using polymeric waterproof membranes. Particularly, the invention relates to waterproofing of surfaces comprising bitumen- or ethylene propylene diene monomer (EPDM)- based materials.

### Background of the invention

In the field of construction polymeric sheets, which are often referred to as membranes, panels, or sheets, are used to protect underground and above ground constructions, such as basements, tunnels, and flat and low-sloped roofs, against penetration water. Waterproofing membranes are applied, for example, to prevent ingress of water through cracks that develop in concrete structures due to building settlement, load deflection, or concrete shrinkage. Roofing membranes used for waterproofing of flat and low-sloped roof structures are typically provided as single-ply or multi-ply membrane systems.

Commonly used materials for the roofing membranes include plastics, in particular thermoplastics such as plasticized polyvinylchloride (p-PVC), thermoplastic olefins (TPE-O, TPO), rubbers, such as ethylene-propylene diene monomer (EPDM), and bitumen. Roofing membranes are typically delivered to a construction site in form of rolls, transferred to the place of installation, unrolled, and adhered to the substrate to be waterproofed. The substrate on which the membrane is adhered may be comprised of variety of materials depending on the installation site. The substrate may, for example, be a concrete, fiber concrete, metal, glass, plastic, or a plywood substrate, or it may include an insulation board or cover board (plate) and/or an existing roofing or waterproofing membrane.

Roofing membranes must be securely fastened to the roof substrate to provide sufficient mechanical strength to resist the shearing forces applied on it due to high wind loads. Roof systems are typically divided into two categories depending on the means used for fastening the roofing membrane to roof substrate. In a mechanically attached roof system, the roofing membrane is fastened to the roof substrate by using screws and/or barbed plates. Mechanical fastening enables high strength bonding, but it provides direct attachment to the roof substrate only at locations where a mechanical fastener affixes the membrane to the surface, which makes mechanically attached membranes susceptible to flutter. In fully adhered roof systems, the membrane is typically adhered to the roof substrate indirectly by using an adhesive layer.

Roofing membranes can be adhesively adhered to roof substrates by using a number of techniques including contact bonding and using self-adhering membranes. In contact bonding, both the membrane and the surface of the roof substrate are first coated with a solvent- or water-based contact adhesive after which the membrane is bonded to the surface of the substrate. The volatile components of the contact adhesive are "flashed off" to provide a partially dried adhesive layers prior to contacting the membrane with the substrate. A fully adhered roof system can also be prepared by using self-adhering roofing membranes having a pre-applied layer of adhesive composition coated on the bottom surface of the membrane. Typically, the pre-applied adhesive layer is covered with a release liner to prevent premature unwanted adhesion and to protect the adhesive layer from moisture, fouling, and other environmental factors. At the time of use the release liner is removed and the roofing membrane is secured to the substrate without using additional adhesives.

One of the challenges in fully adhered roof systems is that the surface of the substrate to be waterproofed may contain various small molecular weight compounds that can migrate from the substrate to the adhesive layer resulting in deterioration of the adhesive properties. Such migrating compounds include, for example, plasticizers for polyvinylchloride-based membranes and oils containing volatile organic compounds (VOC) that can be found, for example, in bitumen- and rubber-based membranes. The problem related to migration of compounds is especially relevant in renovation of old roof systems, whereby the substrate to be waterproofed may be an existing roofing membrane. Furthermore, even if the old membrane has been removed during renovation, the substrate below the membrane may contain significant amount of residues of the old membrane material, especially bitumen. Waterproofing of such "stained" surfaces using commercially available self-adhering roofing membranes is associated with a significant risk of delamination of the membrane due to the migration of bitumen components from the substrate to the adhesive layer of the membrane.

There thus remains a need for a new type of method for providing fully adhered roof systems, where the substrate to be waterproofed contains materials that have tendency to migrate to the adhesive layer used for bonding of the membrane to the surface of the substrate.

### Summary of the invention

The object of the present invention is to provide a method for waterproofing a substrate that solves or at least mitigates the problems of methods of prior art related to migration of small molecular weight compounds from the substrate to a waterproofing membrane system, particularly to an adhesive layer used for bonding waterproofing membrane to a surface of the substrate.

Surprisingly it has been found out that the objects can be achieved with the features of claim 1.

Specifically, according to the invention, a method for waterproofing a substrate is proposed, the method comprising steps of:
I) Applying an epoxy resin layer to at least a portion of the surface of the substrate,
II) Applying a sealing element comprising a polymeric waterproofing layer to the surface of the substrate such that the sealing element also covers the epoxy resin layer,
wherein at least a portion of the surface of the substrate covered with the epoxy resin layer in step I) contains bitumen- and/or ethylene propylene diene monomer (EPDM)-based material.

As it turned out, the epoxide resin layer applied between a substrate and a sealing element, particularly a membrane, effectively prevents migration of small molecular weight compounds from the substrate to the sealing element. Consequently, substrates containing bitumen- or ethylene propylene diene monomer (EPDM)- based material, which may contain these types of small molecular weight compounds, can be waterproofed by using the method of the present invention without risking delamination of the sealing element from the surface of the substrate. The suggested method can, for example, be used for renovation of old roofs, especially the ones comprising a bitumen or EPDM-based roofing membrane.

Additional aspects of the present invention are presented in further independent claims. Preferred embodiments of the invention are outlined throughout the description and the dependent claims.

### Detailed description of the invention

The subject of the present invention is a method for waterproofing a substrate is proposed, the method comprising steps of:
I) Applying an epoxy resin layer to at least a portion of the surface of the substrate,
II) Applying a sealing element comprising a polymeric waterproofing layer to the surface of the substrate such that the sealing element also covers the epoxy resin layer,
wherein at least a portion of the surface of the substrate covered with the epoxy resin layer in step I) contains bitumen- and/or ethylene propylene diene monomer (EPDM)-based material.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" designates a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight may be determined by gel permeation chromatography (GPC) using polystyrene as standard, styrene-divinylbenzene gel with porosity of 100 Angstrom, 1000 Angstrom and 10000 Angstrom as the column and, depending on the molecule, tetrahydrofurane as a solvent, at 35°C, or 1,2,4-trichlorobenzene as a solvent, at 160 °C.

The term "rubber" refers to any polymer or combination of polymers, which is capable of recovering from large deformations, and which can be, or already is, modified to a state in which it is essentially insoluble (but can swell) in a boiling solvent. Typical rubbers are capable of being elongated or deformed to at least 200 % of their original dimension under an externally applied force, and will substantially resume the original dimensions, sustaining only small permanent set (typically no more than about 20%), after the external force is released. As used herein, the term "rubber" may be used interchangeably with the term "elastomer".

The term "softening point" refers to a temperature at which compound softens in a rubber-like state, or a temperature at which the crystalline portion within the compound melts. The softening point can be determined by Ring and Ball measurement conducted according to EN 1427:2015 standard.

The term "melting temperature" refers to a temperature at which a material undergoes transition from the solid to the liquid state. The melting temperature (Tₘ) is preferably determined by differential scanning calorimetry (DSC) according to ISO 11357-3 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1%.

The term "bitumen-based material" refers in the context of the present invention a material containing a significant proportion of bitumen, such as at least 15 wt.-%, particularly at least 25 wt.-%, especially at least 35 wt.-%. In analogy, the term "EPDM-based material" refers to materials containing a significant amount of EPDM, such as at least 15 wt.-%, particularly at least 25 wt.-%, especially at least 35 wt.-%.

Furthermore, the term "bitumen" designates in the present disclosure blends of heavy hydrocarbons, having a solid consistency at room temperature, which are normally obtained as vacuum residue from refinery processes, which can be distillation (topping or vacuum) and conversion (thermal cracking and visbreaking) processes of suitable crude oils. Furthermore, the term "bitumen" also designates natural and synthetic bitumen as well as bituminous materials obtained from the extraction of tars and bituminous sands.

The bitumen- based material contained in the surface of the substrate to be waterproofed can comprise one of more different types of bitumen materials, such as penetration grade (distillation) bitumen, air-rectified (semi-blown) bitumen, and hard grade bitumen.

The term "ethylene propylene diene monomer (EPDM)" refers in the present disclosure to terpolymer of ethylene, propylene, and a non-conjugated diene. Non-limiting examples of suitable non-conjugated dienes to be used in EPDM include, for example, 5-ethylidene-2-norbornene (ENB); 1,4-hexadiene; 5-methylene-2-norbornene (MNB); 1,6-octadiene; 5-methyl-1,4-hexadiene; 3,7-dimethyl-1,6-octadiene; 1,4-cyclohexadiene; tetrahydroindene; methyltetrahydroindene; dicyclopentadiene; 5-isopropylidene-2-norbornene; and 5-vinyl-norbornene.

In the proposed method, the epoxy resin layer is applied to cover at least a portion of the surface of the substrate containing bitumen- or EPDM- based material. However, it is possible that the epoxy resin layer is applied to also cover areas of the surface of the substrate, which do not contain any of these materials. For example, the epoxy resin layer may be applied to cover substantially the whole surface of the substrate to be waterproofed using the sealing element.

Furthermore, the bitumen- and/or EPDM- based material may be present as a continuous or discontinuous layer on the surface of the substrate to be waterproofed. Alternatively, a portion of the substrate to be waterproofed or the whole substrate can be composed of the bitumen- and/or EPDM- based material.

Particularly, the substrate to be waterproofed may be a roof substrate, especially a roof deck, an insulation board, a roof cover plate, a parapet wall, or a membrane, particularly a roofing membrane or a roof flashing membrane, such as a bitumen- or EPDM-based membrane.

For example, the substrate to be waterproofed may be an old bitumen- or EPDM- based membrane, particularly a roofing membrane, which is covered with the sealing element, such as a new roofing membrane. On the other hand, the substrate to be waterproofed may be a roof deck, an insulation board, a roof cover plate, or a parapet wall having a surface containing residues (stains) of bitumen- and/or EPDM- based material, which may originate from an adhered membrane, particularly an adhesively adhered roofing membrane or roof flashing membrane, which was removed from the surface of the substrate during roof renovation.

In some variations, step II) of the method is conducted such that the sealing element becomes adhesively adhered to the surface of the substrate. Here the expression "adhesively adhered" is understood to mean that the sealing element is bonded to the surface of the substrate via an adhesive layer positioned between the surface of the substrate and the sealing element.

The epoxy resin layer may be obtained by coating an epoxy resin composition to the surface of the substrate.

In variations, the epoxy resin composition comprises:
A) At least one liquid epoxy resin and
B) At least one amine hardener.

Preferred one liquid epoxy resins are in particular aromatic epoxy resins, especially the glycidyl ethers of:
- bisphenol A, bisphenol F or bisphenol A/F, where A stands for acetone and F for formaldehyde, which served as reactants for the preparation of these bisphenols. In the case of bisphenol F, positional isomers may also be present, especially derived from 2,4'- or 2,2'-hydroxyphenylmethane;
- dihydroxybenzene derivatives such as resorcinol, hydroquinone or catechol;
- further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxyphenyl)propane, 2,2-bis(4-hydroxy-3-tert-butylphenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol TMC), 1,1-bis(4-hydroxyphenyl)-1-phenylethane, 1,4-bis[2-(4-hydroxyphenyl)-2-propyl]benzene (bisphenol P), 1,3-bis[2-(4-hydroxyphenyl)-2-propyl]benzene (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4-hydroxyphenyl)ethane, bis(4-hydroxyphenyl) ether or bis(4-hydroxyphenyl) sulfone;
- condensation products of phenols with formaldehyde that are obtained under acidic conditions, such as phenol novolaks or cresol novolaks, also called bisphenol F novolaks; and
- aromatic amines such as aniline, toluidine, 4-aminophenol, 4,4'-methylenediphenyldiamine, 4,4'-methylenediphenyldi(N-methyl)amine, 4,4'-[1,4-phenylenebis(1-methylethylidene)]bisaniline (bisaniline P) or4,4'-[1,3-phenylenebis(1-methylethylidene)]bisaniline (bisaniline M).

Especially suitable liquid epoxy resin is a liquid resin based on a bisphenol, particularly a bisphenol A diglycidyl ether and/or bisphenol F diglycidyl ether, as are commercially available, for example, from Dow, Huntsman or Momentive. These liquid resins have a viscosity that is low for epoxy resins and good properties as a coating when cured. They may contain proportions of solid bisphenol A resin or novolak glycidyl ethers.

Suitable amine hardeners include, for example:
- aliphatic, cycloaliphatic or arylaliphatic primary di- or triamines, especially isophorone diamine (IPD) and m-xylylenediamine (MXDA),
- ether group-containing aliphatic primary di- or triamines,
- polyamines containing secondary amino groups, preferably 2-piperazin-1-ylethylamine, and
- adducts of these amines with epoxides or epoxy resins, in particular adducts with diepoxides or monoepoxides.

The amine hardener may consist of a mixture of hardeners from said list.

In variations, the amine hardener consists of a mixture of:
- aliphatic, cycloaliphatic or arylaliphatic primary di- or triamines, especially isophorone diamine (IPD) and m-xylylenediamine (MXDA), and
- polyamines containing secondary amino groups, preferably 2-piperazin-1-ylethylamine.

Especially suitable the epoxy resin compositions may have a water content of less than 5 wt.-%, preferably less than 3 wt.%, based on the total weight of the composition.

Furthermore, the epoxy resin composition may have, 2 minute after mixing all the constituents, a viscosity of less than 15000 cP, particularly less than 12500 cP, especially less than 10000 cP measured using a Brookfield DV1 Viscometer with a HB-04 spindle @100 rounds per minute at 23 °C.

The term "polymeric layer" refers in the present disclosure to layers containing one or more polymers, especially containing at least 15 wt.-%, particularly at least 35 wt.-% of at least one polymer.

In variations, the polymeric waterproofing layer comprises at least one polymer selected from polyvinylchloride (PVC), polyolefins, halogenated polyolefins, rubbers, and ketone ethyl esters (KEE).

Especially suitable PVC resins for use as in the polymeric waterproofing layer include ones having a K-value determined by using the method as described in ISO 1628-2-1998 standard in the range of 50 - 85, preferably 65 - 75. The K-value is a measure of the polymerization grade of the PVC resin, and it is determined from the viscosity values of the PVC homopolymer as virgin resin, dissolved in cyclohexanone at 30° C.

Term "polyolefin" refers in the present disclosure to homopolymers and copolymers obtained by polymerization of olefin monomers optionally with other types of comonomers. Suitable polyolefins for use in the polymeric waterproofing layer include, for example, thermoplastic polyolefin elastomers (TPO, TPO-E), particularly heterophasic propylene copolymers. Heterophasic polymers are polymer systems comprising a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier.

Especially suitable commercially available heterophasic propylene copolymers include reactor blends of the base polyolefin and the polyolefin modifier, also known as "in-situ TPOs" or "reactor TPOs or "impact copolymers (ICP)", which are typically produced in a sequential polymerization process, wherein the components of the matrix phase are produced in a first reactor and transferred to a second reactor, where the components of the dispersed phase are produced and incorporated as domains in the matrix phase. Heterophasic propylene copolymers comprising polypropylene homopolymer as the base polymer are often referred to as "heterophasic propylene copolymers (HECO)" whereas heterophasic propylene copolymers comprising polypropylene random copolymer as the base polymer are often referred to as "heterophasic propylene random copolymers (RAHECO)". The term "heterophasic propylene copolymer" encompasses in the present disclosure both the HECO and RAHECO types of the heterophasic propylene copolymers.

Suitable rubbers for use in the polymeric waterproofing layer include, for example, styrene-butadiene rubber (SBR), ethylene propylene diene monomer (EPDM), butyl rubber, polyisoprene, polybutadiene, natural rubber, polychloroprene rubber, ethylene-propylene rubber (EPR), nitrile rubber, acrylic rubber, ethylene vinyl acetate rubber, and silicone rubber, and chemically crosslinked versions of the aforementioned rubbers.

In variations, the polymeric waterproofing layer contains at least one polymer selected from polyvinylchloride, polyolefins, halogenated polyolefins, and ethylene propylene diene monomer (EPDM), particularly from polyvinylchloride and polyolefins, and ethylene propylene diene monomer (EPDM), especially from polyvinylchloride and thermoplastic polyolefin elastomers (TPO-E).

The detailed composition of the polymeric waterproofing layer is not particularly restricted. However, the composition of the polymeric waterproofing layer may be selected such that the sealing element fulfils the general requirements for plastic and rubber sheets for roof waterproofing, such as the requirements of EN 13956:2013-03 standard.

It may, for example, be preferred that the composition of the polymeric waterproofing layer is selected such that the sealing element shows an impact resistance measured according to EN 12691: 2005 standard in the range of 200 - 1500 mm and/or a longitudinal and a transversal tensile strength measured at a temperature of 23 °C according to DIN ISO 527-3 standard of at least 5 MPa and/or a longitudinal and transversal elongation at break measured at a temperature of 23 °C according to DIN ISO 527-3 standard of at least 300 % and/or a water resistance measured according to EN 1928 B standard of 0.6 bar for 24 hours and/or a maximum tear strength measured according to EN 12310-2 standard of at least 100 N.

In variations, the polymeric waterproofing layer is a polyvinylchloride-based layer, particularly comprising:
a) 25 - 65 wt.-% of a polyvinylchloride resin, as the at least one polymer,
b) 15 - 50 wt.-% of at least one plasticizer for polyvinylchloride resin, and
c) 0 - 60 wt.-% of at least one inorganic filler, all proportions being based on the total weight of the waterproofing layer.

The polyvinylchloride resin may have a K-value determined by using the method as described in ISO 1628-2-1998 standard in the range of 50 - 85, more preferably 65 - 75.

In variations, the composition of the waterproofing layer has a glass transition temperature (T_{g}), determined by dynamical mechanical analysis (DMA) using an applied frequency of 1 Hz and a strain level of 0.1 %, of below - 20 °C, more preferably below - 25 °C.

The type of the at least one plasticizer for the polyvinylchloride resin is not particularly restricted in the present invention. Suitable plasticizers for the PVC-resin include but are not restricted to, for example, linear or branched phthalates such as di-isononyl phthalate (DINP), di-nonyl phthalate (L9P), diallyl phthalate (DAP), di-2-ethylhexyl-phthalate (DEHP), dioctyl phthalate (DOP), diisodecyl phthalate (DIDP), and mixed linear phthalates (911P). Other suitable plasticizers include phthalate-free plasticizers, such as trimellitate plasticizers, adipic polyesters, and biochemical plasticizers. Examples of biochemical plasticizers include epoxidized vegetable oils, for example, epoxidized soybean oil and epoxidized linseed oil and acetylated waxes and oils derived from plants, for example, acetylated castor wax and acetylated castor oil.

Particularly suitable phthalate-free plasticizers to be used with the PVC resin include alkyl esters of benzoic acid, dialkyl esters of aliphatic dicarboxylic acids, polyesters of aliphatic dicarboxylic acids or of aliphatic di-, tri- and tetrols, the end groups of which are unesterified or have been esterified with monofunctional reagents, trialkyl esters of citric acid, acetylated trialkyl esters of citric acid, glycerol esters, benzoic diesters of mono-, di-, tri-, or polyalkylene glycols, trimethylolpropane esters, dialkyl esters of cyclohexanedicarboxylic acids, dialkyl esters of terephthalic acid, trialkyl esters of trimellitic acid, triaryl esters of phosphoric acid, diaryl alkyl esters of phosphoric acid, trialkyl esters of phosphoric acid, and aryl esters of alkanesulphonic acids.

In examples, the at least one plasticizer for the PVC resin is selected from the group consisting of phthalates, trimellitate plasticizers, adipic polyesters, and biochemical plasticizers.

Suitable inorganic fillers for use in the polymeric waterproofing layer include sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

In variations, the polymeric waterproofing layer comprises 5-30 wt.-%, particularly 10 - 30 wt.-%, especially 15 - 30 wt.-% of the at least one inorganic filler.

The polymeric waterproofing layer can further comprise one or more additives, for example, UV- and heat stabilizers, antioxidants, flame retardants, dyes, pigments such as titanium dioxide and carbon black, matting agents, antistatic agents, impact modifiers, biocides, and processing aids such as lubricants, slip agents, antiblock agents, and denest aids.

The polymeric waterproofing layer may have a thickness of 0.35 - 3.5 mm, such as 0.5 - 2.5 mm, especially 0.75 - 2 mm. A thickness of a polymeric layer can be determined, for example, by using the measurement method as defined in EN 1849-2:2019 standard.

Furthermore, the polymeric waterproof membrane may have a width of 0.15 - 4 m, preferably 0.35 - 3.5 m, more preferably 0.5 - 3 m, even more preferably 0.75 - 3 m.

In variations, the sealing element is a roofing membrane or a roof flashing membrane.

As discussed above, step II) of the method can be conducted such that the sealing element becomes adhesively adhered to the surface of the substrate.

The adhesive used for adhering the sealing element to the surface of the substrate can be present on a surface of the sealing element or it can be applied to the surface of the substrate and/or a surface of the sealing element before step II) is conducted.

In variations, the sealing element is a self-adhering sealing element comprising the polymeric waterproofing layer and a pressure sensitive adhesive layer.

In these variations, step II) may comprise:
- covering the surface of the substrate with the sealing element such that the pressure sensitive adhesive layer of the self-adhering sealing element forms an interlayer between the substrate and the sealing element, particularly wherein at least a portion of the opposing surfaces of the substrate and the sealing element are directly connected to each other via the interlayer and
- pressing the sealing element against the surface of the substrate with a pressure sufficient to affect adhesive bonding between the sealing element and the substrate.

In further variations, the method for waterproofing a substrate may comprise further steps, which are conducted after step I) and before step II), the further steps including:
- providing an adhesive element comprising a pressure sensitive adhesive layer having first and second primary exterior surfaces and a release liner covering the second primary exterior surface of the pressure sensitive adhesive layer and
- applying the adhesive element to the surface of the substrate such that the pressure sensitive adhesive layer also covers the epoxy resin layer, and
- removing the release liner from the adhesive element.

In these further variations, step II) may comprise:
- covering the surface of the substrate with the sealing element such that the pressure sensitive adhesive layer of the adhesive element forms an interlayer between the substrate and the sealing element, particularly wherein at least a portion of the opposing surfaces of the substrate and the sealing element are directly connected to each other via the interlayer and
- pressing the sealing element against the surface of the substrate with a pressure sufficient to affect adhesive bonding between the sealing element and the substrate.

The release liner may be used to prevent premature unwanted adhesion and to protect the pressure sensitive adhesive layer from moisture, fouling, and other environmental factors. Furthermore, the release liner may be sliced into multiple sections to allow portioned detachment of the liner from the pressure sensitive adhesive layer.

Suitable materials for the release liner include Kraft paper, polyethylene coated paper, silicone coated paper as well as polymeric films, for example, polyethylene, polypropylene, and polyester films coated with polymeric release agents selected from silicone, silicone urea, urethanes, waxes, and long chain alkyl acrylate release agents.

The adhesive element may further comprise a reinforcing layer, which is fully embedded into the pressure sensitive adhesive layer. The expression "fully embedded" is understood to mean that the reinforcing layer is substantially fully covered by the matrix of the pressure sensitive adhesive layer.

The reinforcing layer may be used to ensure the mechanical stability of the pressure sensitive adhesive layer, for example, during longer storage periods. Furthermore, the reinforcing layer may also enable a simplified and more efficient production of the adhesive element.

Preferably, the reinforcing layer is selected from the group consisting of non-woven fabrics, woven fabrics, laid scrims, and polymer films, more preferably from non-woven fabrics, woven fabrics, and laid scrims.

The term "non-woven fabric" designates in the present disclosure materials composed of fibers, which are bonded together by using chemical, mechanical, or thermal bonding means, and which are neither woven nor knitted. Non-woven fabrics can be produced, for example, by using a carding or needle punching process, in which the fibers are mechanically entangled to obtain the nonwoven fabric. In chemical bonding, chemical binders such as adhesive materials are used to hold the fibers together in a non-woven fabric.

Preferred non-woven fabrics for use as the reinforcement layer comprise synthetic organic and/or inorganic fibers. Particularly suitable synthetic organic fibers for the nonwoven fabric include, for example, polyester fibers, polypropylene fibers, polyethylene fibers, nylon fibers, and polyamide fibers whereas particularly suitable inorganic fibers include, for example, glass fibers, aramid fibers, wollastonite fibers, and carbon fibers.

The term "laid scrim" refers in the present disclosure web-like non-woven products composed of at least two sets of parallel yarns (also designated as weft and warp yarns), which lay on top of each other and are chemically bonded to each other. The yarns of a non-woven scrim are typically arranged with an angle of 60 - 120°, such as 90 ± 5°, towards each other thereby forming interstices, wherein the interstices occupy more than 60% of the entire surface area of the laid scrim. Typical materials for laid scrims include metal fibers, inorganic fibers, particularly glass fibers, and synthetic organic fibers, in particular polyester, polypropylene, polyethylene, and polyethylene terephthalate (PET).

In variations, the reinforcing layer has a mass per unit weight of not more than 500 g/m², more preferably not more than 350 g/m², especially 10 - 500 g/m², particularly 25 - 350 g/m², such as 35 - 250 g/m².

In still further variations, the method for waterproofing a substrate may comprise further steps, which are conducted after step I) and before step II), the further steps including:
- applying a first layer of an adhesive composition to the surface of the substrate and
- optionally applying a second layer of the adhesive composition to a surface of the polymeric waterproofing layer, wherein the first adhesive layer also covers the epoxy resin layer.

In these still further variations, step II) may comprise:
- covering the surface of the substrate with the sealing element such that the first or second adhesive layer or the combination of these forms an interlayer between the substrate and the sealing element, particularly wherein at least a portion of the opposing surfaces of the substrate and the sealing element are directly connected to each other via the interlayer and
- optionally pressing the sealing element against the surface of the substrate with a pressure sufficient to affect adhesive bonding between the sealing element and the substrate.

In variations, the adhesive composition is a solvent- or water-based adhesive composition or a reactive adhesive composition, preferably selected from one- and two-component epoxide, acrylic, and polyurethane adhesives.

In some variations, the method for waterproofing a substrate may comprise further steps, which are conducted after step I) and before step II), the further steps including:
- applying a first layer of a solvent- or water-based adhesive composition to the surface of the substrate,
- applying a second layer of the solvent-or water-based adhesive composition to a surface of the polymeric waterproofing layer, wherein the first adhesive layer also covers the epoxy resin layer, and
- allowing the solvent or water in the first and second adhesive layers to evaporate at least partially to form first and second at least partially dried adhesive layers suitable for contact bonding.

In these variations, step II) may comprise:
- covering the surface of the substrate with the sealing element such that the first and second at least partially dried adhesive layers are contacted with each other to form an interlayer between the substrate and the sealing element, particularly wherein at least a portion of the opposing surfaces of the substrate and the sealing element are directly connected to each other via the interlayer and
- pressing the sealing element against the surface of the substrate with a pressure sufficient to affect adhesive bonding between the sealing element and the substrate.

The term "pressure sensitive adhesive (PSA)" designates in the present disclosure viscoelastic materials, which adhere immediately to almost any kind of substrates by application of light pressure, and which are permanently tacky. The tackiness of an adhesive layer can be measured, for example, as a loop tack.

Suitable pressure sensitive adhesives for use in the adhesive element include, for example, acrylic adhesives and synthetic and natural rubber- based adhesives.

Suitable rubbers for use in a synthetic rubber-based pressure sensitive adhesive include for example, styrene block copolymers, vinyl ether polymers, styrene-butadiene rubber (SBR), ethylene propylene diene monomer (EPDM), butyl rubber, polyisoprene, polybutadiene, polychloroprene rubber, ethylene-propylene rubber (EPR), nitrile rubber, acrylic rubber, ethylene vinyl acetate rubber, or silicone rubber.

Suitable styrene block copolymers for use in the synthetic rubber-based adhesive include styrene block copolymers of the SXS type, in each of which S denotes a non-elastomer styrene (or polystyrene) block and X denotes an elastomeric α-olefin block, which may be polybutadiene, polyisoprene, polyisoprene-polybutadiene, completely or partially hydrogenated polyisoprene (poly ethylene-propylene), or completely or partially hydrogenated polybutadiene (poly ethylene-butylene). The elastomeric α-olefin block preferably has a glass transition temperature in the range from -55 °C to -35 °C. The elastomeric α-olefin block may also be a chemically modified α-olefin block. Particularly suitable chemically modified α-olefin blocks include, for example, maleic acid-grafted α-olefin blocks and particularly maleic acid-grafted ethylene-butylene blocks.

Especially suitable styrene block copolymers include block copolymers containing polystyrene and polybutadiene blocks and/or polyisoprene blocks. These materials are generally available as pure triblock copolymers, also known as SIS and SBS block copolymers, and as diblock copolymers (SI and SB block copolymers). Furthermore, styrene block copolymers are also commercially available as mixtures of diblock and triblock copolymers. Suitable styrene block copolymers can have a linear, radial, or star structure, wherein the linear structure may be preferred.

In addition to the above-mentioned constituents, suitable pressure sensitive adhesives may comprise one or more additional constituents including, for example, tackifying resins, waxes, and additives, for example, UV-light absorption agents, UV- and heat stabilizers, optical brighteners, pigments, dyes, and desiccants.

In variations, the pressure sensitive adhesive layer of the self-adhering sealing element or of the adhesive element is an acrylic pressure sensitive adhesive layer, preferably comprising at least 35 wt.-%, more preferably at least 50 wt.-%, based on the total weight of the pressure sensitive adhesive layer, of at least one acrylic polymer **AP.**

The term "acrylic polymer" designates in the present disclosure homopolymers, copolymers and higher inter-polymers of an acrylic monomer with one or more further acrylic monomers and/or with one or more other ethylenically unsaturated monomers.

The term "monomer" refers to a compound that chemically bonds to other molecules, including other monomers, to form a polymer. The term "acrylic monomer" refers to monomers having at least one (meth)acryloyl group in the molecule. The term "(meth)acryloyl" designates methacryloyl or acryloyl. Accordingly, the term "(meth)acrylic" designates methacrylic or acrylic. A (meth)acryloyl group is also known as (meth)acryl group.

The polymer chains of the acrylic polymers contained in the pressure sensitive adhesive layer may be non-crosslinked or physically or chemically crosslinked. Furthermore, the polymer chains of the acrylic polymers may be present in the pressure sensitive adhesive layer as part of a chemically crosslinked polymer network comprising other polymers than acrylic polymers or as part of an interpenetrating or semi-interpenetrating polymer network (IPN).

The term "interpenetrating polymer network" refers to a polymer network comprising two or more dissimilar polymers that are in network form, i.e., chemically, or physically crosslinked. In an IPN, the polymer chains are not chemically bonded, but they are physically entangled by permanent chain entanglements. In a semi-interpenetrating polymer network, the polymer network and a linear or branched polymer penetrate each other at the molecular level.

In some variations, the pressure sensitive adhesive layer comprises at least 50 wt.-%, preferably at least 75 wt.-%, more preferably at least 85 wt.-%, even more preferably at least 95 wt.-%, based on the total weight of the pressure sensitive adhesive layer, of the at least one acrylic polymer **AP.**

Examples of suitable acrylic monomers for use in the at least one acrylic polymer **AP** include, for example, (meth)acrylates, (meth)acrylic acid or derivatives thereof, for example, amides of (meth)acrylic acid or nitriles of (meth)acrylic acid, and (meth)acrylates with functional groups such as hydroxyl group-containing (meth)acrylates and alkyl (meth)acrylates.

In variations, the acrylic polymer **AP** has been obtained from a monomer mixture comprising at least 45 wt.-%, preferably at least 55 wt.-%, more preferably at least 65 wt.-%, even more preferably at least 75 wt.-%, still more preferably at least 85 wt.-%, based on the total weight of the monomer mixture, of at least one acrylic monomer **AM** of formula (I): 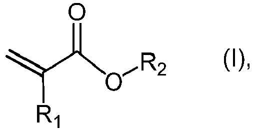 where
R₁ represents a hydrogen or a methyl group; and
R₂ represents a branched, unbranched, cyclic, acyclic, or saturated alkyl group having from 2 to 30 carbon atoms.

Examples of suitable acrylic monomers of formula (I) include methyl acrylate, methyl methacrylate, ethyl acrylate, ethoxy ethoxy ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, and their branched isomers, as for example isobutyl acrylate, 2-ethylhexyl acrylate, 2-ethylhexyl methacrylate, isooctyl acrylate, isooctyl methacrylate, and also cyclohexyl methacrylate, isobornyl acrylate, isobornyl methacrylate or 3,5-dimethyladamantyl acrylate.

Suitable comonomers to be used with the acrylic monomers of formula (I) include, for example, hydroxyl group containing acrylic monomers, such as 2-hydroxyethyl(meth)acrylate, 2-hydroxypropyl(meth)acrylate, 3-hydroxypropyl (meth)acrylate, 2-hydroxybutyl(meth)acrylate, 4-hydroxybutyl butyl(meth)acrylate, 2-hydroxy-hexyl(meth)acrylate, 6-hydroxy hexyl(meth) acrylate, 8-hydroxyoctyl(meth)acrylate, 10-hydroxydecyl (meth)acrylate, 12-hydroxylauryl(meth)acrylate. Further suitable hydroxyl group containing acrylic monomers include (4-hydroxymethyl cyclohexyl)methyl acrylate, polypropylene glycol mono (meth)acrylate, N- hydroxyethyl (meth)acrylamide, and N- hydroxypropyl (meth)acrylamide, esters of hydroxyethyl(meth)acrylate and phosphoric acid, and trimethoxysilylpropyl methacrylate.

In variations, the monomer mixture used for obtaining the at least one acrylic polymer **AP** comprises not more than 25 wt.-%, preferably not more than 20 wt.-%, such as 0.01 - 15 wt.-%, preferably 0.1 - 10 wt.-%, based on the total weight of the monomer mixture, of at least one hydroxyl group containing acrylic monomer.

Further suitable comonomers for the synthesis of the at least one acrylic polymer **AP** include vinyl compounds, such as ethylenically unsaturated hydrocarbons with functional groups, vinyl esters, vinyl halides, vinylidene halides, nitriles of ethylenically unsaturated hydrocarbons, phosphoric acid esters, and zinc salts of (meth)acrylic acid. Examples of especially suitable vinyl compounds include, for example, maleic anhydride, styrene, styrenic compounds, acrylic acid, beta-acryloyloxypropionic acid, vinylacetic acid, fumaric acid, crotonic acid, aconitic acid, trichloroacrylic acid, itaconic acid, vinyl acetate, and acryloyl morpholine.

In variations, the monomer mixture used for obtaining the at least one acrylic polymer **AP** comprises at least 0.1 wt.-%, preferably at least 0.5 wt.-%, such as 0.1 - 20 wt.-%, preferably 0.5 - 15 wt.%, based on the total weight of the monomer mixture, of at least one vinyl compound, preferably selected from the group consisting of maleic anhydride, styrene, styrenic compounds, (meth)acrylamides, N-substituted (meth)acrylamides, acrylic acid, beta-acryloyloxypropionic acid, vinylacetic acid, fumaric acid, crotonic acid, aconitic acid, dimethylacrylic acid, trichloroacrylic acid, itaconic acid, vinyl acetate, and amino group-containing (meth)acrylates.

The at least one acrylic polymer **AP** may have a glass transition temperature (T_{g}), determined by dynamical mechanical analysis (DMA) using an applied frequency of 1 Hz and a strain level of 0.1 %, of below 0 °C, preferably below - 20 °C and/or a number average molecular weight (Mₙ) determined by gel permeation chromatography using polystyrene as standard of 50000 - 1000000 g/mol, preferably 100000 - 750000 g/mol, more preferably 150000 - 500000 g/mol.

In variations, the pressure sensitive adhesive layer has a mass per unit area of 50 - 500 g/m², more preferably 100 - 350 g/m², even more preferably 100 - 250 g/m².

In variations, the pressure sensitive adhesive layer is a dried layer of a water- or solvent-based acrylic pressure sensitive adhesive composition or a cured layer of an actinic radiation or electron beam curable acrylic pressure sensitive adhesive composition. The term "dried layer" is understood to mean a layer of the adhesive composition comprising not more than 10 wt.-%, particularly not more than 5 wt.-%, especially not more than 2.5 wt.-%, of water or organic solvents, respectively.

The term "actinic radiation" refers here to electromagnetic radiation that is capable of initiating photochemical reactions with wavelengths ranging from the ultraviolet light range through the visible light range and into the infrared range. Furthermore, the term "cured layer" is understood to mean that the adhesive composition has been at least partially cured.

The term "water-based pressure sensitive adhesive composition" designates in the present disclosure pressure sensitive adhesives, which have been formulated as an aqueous dispersion, an aqueous emulsion, or as an aqueous colloidal suspension. The term "aqueous dispersion" or "aqueous emulsion" refers to dispersions or emulsions containing water as the main continuous (carrier) phase. Typically, a water-based pressure sensitive adhesive composition comprises surfactants to stabilize the hydrophobic polymer particles and to prevent these from coagulating with each other.

The term "solvent-based pressure sensitive adhesive composition" designates in the present disclosure pressure sensitive adhesives comprising acrylic polymers, which are substantially completely dissolved in the organic solvent(s). Typically, the organic solvent(s) comprise at least 20 wt.-%, preferably at least 30 wt.-%, more preferably at least 40 wt.-%, of the total weight of the solvent-based pressure sensitive adhesive composition. The term "organic solvent" refers in the present document to organic substances that are liquid at a temperature of 25 °C, are able to dissolve another substance at least partially, and have a standard boiling point of not more than 225°C, preferably not more than 200 °C. The term "standard boiling point" refers in the present disclosure to boiling point measured at a pressure of 1 bar. The standard boiling point of a substance or composition can be determined, for example, by using an ebulliometer.

Suitable organic solvents for the solvent-based pressure sensitive adhesive composition include, for example, alcohols, aliphatic and aromatic hydrocarbons, ketones, esters, and mixtures thereof. It is possible to use only a single organic solvent or a mixture of two or more organic solvents. Suitable solvent-based pressure sensitive adhesive compositions are substantially water-free, for example, containing less than 10 wt.-%, preferably less than 5 wt.-%, more preferably less than 1 wt.-% of water, based on the total weight of the solvent-based pressure sensitive adhesive.

The term "actinic radiation-curable acrylic pressure sensitive adhesive composition" refers to acrylic pressure sensitive adhesives, which can be cured by initiation of photochemical curing reactions by actinic irradiation. In analogy, the term "electron beam curable acrylic pressure sensitive adhesive composition" refers to acrylic pressure sensitive adhesives, which can be cured by initiation of photochemical curing reactions by accelerated electrons. The term "curing" in the present disclosure to chemical reactions comprising forming of bonds resulting, for example, in chain extension and/or crosslinking of polymer chains.

Especially suitable water- or solvent-based acrylic pressure sensitive adhesive compositions may comprise:
- 25 - 85 wt.-%, preferably 35 - 75 wt.-%, of the at least one acrylic polymer **AP** and
- 5 - 85 wt.-%, preferably 10 - 75 wt.-%, of water or at least one organic solvent, all proportions being based on the total weight of the water- or solvent-based acrylic pressure sensitive adhesive composition.

In addition to the at least one acrylic polymer **AP,** the water- or solvent-based acrylic pressure sensitive adhesive composition may further comprise one or more additional constituents including, for example, tackifying resins, waxes, and plasticizers as well as one or more additives, such as UV-light absorption agents, UV- and heat stabilizers, optical brighteners, pigments, dyes, and desiccants. Preferably, the total amount of such additional constituents and additives is not more than 35 wt.-%, more preferably not more than 25 wt.-%, most preferably not more than 15 wt.-%, based on the total weight of the water- or solvent-based acrylic pressure sensitive adhesive composition.

Suitable actinic radiation- curable acrylic pressure sensitive adhesive compositions include UV- curable acrylic pressure sensitive adhesive compositions, such as UV-curable acrylic hot-melt pressure sensitive adhesive compositions comprising:
- At least 65 wt.-%, preferably at least 85 wt.-%, of at least one UV-curable acrylic polymer **UV-AP** having one or more photo initiator groups,
- 0 - 15 wt.-%, preferably 0.1 - 10 wt.-%, of at least one reactive diluent, and
- 0 - 20 wt.-%, preferably 1-15 wt.-%, of at least one filler **F,** all proportions being based on the total weight of the UV-curable acrylic hot-melt pressure sensitive adhesive composition.

The at least one UV-curable acrylic polymer **UV-AP** comprises polymerized units that serve as photoinitiators. Suitable polymerized units that serve as photo initiators may be obtained by using copolymerizable photo initiators, such as acetophenone and benzophenone derivatives.

The at least one UV-curable acrylic polymer **UV-AP** may comprise 0.05 - 10 wt.-%, preferably 0.1 - 5 wt.-%, more preferably 0.1 - 1.5 wt.-%, based on the weight of the acrylic polymer **UV-AP,** of at least one ethylenically unsaturated compound having a photo initiator group.

Suitable compounds for use as the filler **F** include, for example, sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

Preferably, the at least one filler **F** has a median particle size d₅₀ of not more than 150 µm, more preferably not more than 100 µm. The at least one filler **F** may have a median particle size d₅₀ of 0.1 - 100 µm, preferably 0.15 - 50 µm, more preferably 0.15 - 25 µm, even more preferably 0.25 - 15 µm.

The term "particle size" refers in the present disclosure to the area-equivalent spherical diameter of a particle (Xₐᵣₑₐ). The term "median particle size d₅₀" refers to a particle size below which 50 % of all particles by volume are smaller than the d₅₀ value. In analogy, the term d₉₀ particle size refers in the present disclosure to a particle size below which 90 % of all particles by volume are smaller than the d₉₀ value and term "d₁₀ particle size" refers to a particle size below which 10 % of all particles by volume are smaller than the d₁₀ value. A particle size distribution can be measured by laser diffraction according to the method as described in standard ISO 13320:2009 using a wet or dry dispersion method and for example, a Mastersizer 2000 device (trademark of Malvern Instruments Ltd, GB).

Suitable UV-curable acrylic hot-melt pressure sensitive adhesive compositions are commercially available, for example, under the trade name of acResin^{®} (from BASF); under the trade name of AroCure^{®} (form Ashland Chemical); and under the trade name of NovaMeltRC^{®} (from Henkel).

Further suitable UV-curable acrylic pressure sensitive adhesives compositions include UV-curable acrylic hot-melt pressure sensitive adhesive compositions comprising:
- at least 65 wt.-%, preferably at least 75 wt.-%, of the at least acrylic polymer **AP,**
- 0 - 30 wt.-%, preferably 5-20 wt.-%, of at least one tackifying resin **TR,**
- 0 - 5 wt.-%, preferably 0.01 - 1 wt.-%, of at least one cross-linking agent **CA,**
- 0.1 - 5 wt.-%, preferably 0.25 - 2.5 wt.-%, of at least one photoinitiator **PI,**
all proportions being based on the total weight of the UV-curable acrylic hot-melt pressure sensitive adhesive composition.

The term "tackifying resin" designates in the present disclosure resins that in general enhance the adhesion and/or tackiness of an adhesive composition. The term "tackiness" designates in the present disclosure the property of a substance of being sticky or adhesive by simple contact. The tackiness can be measured, for example, as a loop tack. Preferred tackifying resins are tackifying at a temperature of 25 °C or below.

Examples of suitable compounds to be used as the at least one tackifying resin **TR** include natural resins, synthetic resins and chemically modified natural resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "synthetic resin" refers to compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Aliphatic monomers can include C₄, C₅, and C₆ paraffins, olefins, and conjugated diolefins. Examples of aliphatic monomer or cycloaliphatic monomer include butadiene, isobutylene, 1,3-pentadiene, 1,4-pentadiene, cyclopentane, 1-pentene, 2-pentene, 2- methyl-1-pentene, 2-methyl-2-butene, 2-methyl-2-pentene, isoprene, cyclohexane, 1,3-hexadiene, 1,4-hexadiene, cyclopentadiene, dicyclopentadiene, and terpenes. Aromatic monomer can include C₈, C₉, and C₁₀ aromatic monomer. Examples of aromatic monomer include styrene, indene, derivatives of styrene, derivatives of indene, coumarone, and combinations thereof.

Particularly suitable synthetic resins include synthetic hydrocarbon resins made by polymerizing mixtures of unsaturated monomers that are obtained as by-products of cracking of natural gas liquids, gas oil, or petroleum naphthas. Synthetic hydrocarbon resins obtained from petroleum-based feedstocks are referred in the present disclosure as "hydrocarbon resins" or "petroleum hydrocarbon resins". These include also pure monomer aromatic resins, which are made by polymerizing aromatic monomer feedstocks that have been purified to eliminate color causing contaminants and to precisely control the composition of the product. Hydrocarbon resins typically have a relatively low average molecular weight (Mₙ), such in the range of 250 - 5000 g/mol and a glass transition temperature, determined by dynamical mechanical analysis (DMA) as the peak of the measured loss modulus (G") curve using an applied frequency of 1 Hz and a strain level of 0.1 %, of above 0 °C, preferably equal to or higher than 15 °C, more preferably equal to or higher than 30 °C.

Examples of suitable hydrocarbon resins include C5 aliphatic hydrocarbon resins, mixed C5/C9 aliphatic/aromatic hydrocarbon resins, aromatic modified C5 aliphatic hydrocarbon resins, cycloaliphatic hydrocarbon resins, mixed C5 aliphatic/cycloaliphatic hydrocarbon resins, mixed C9 aromatic/cycloaliphatic hydrocarbon resins, mixed C5 aliphatic/cycloaliphatic/C9 aromatic hydrocarbon resins, aromatic modified cycloaliphatic hydrocarbon resins, C9 aromatic hydrocarbon resins, polyterpene resins, and copolymers and terpolymers of natural terpenes as well hydrogenated versions of the aforementioned hydrocarbon resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50 %, 70 %, or 90 %.

Suitable hydrocarbon resins are commercially available, for example, under the trade name of Wingtack^{®} series, Wingtack^{®} Plus, Wingtack^{®} Extra, and Wingtack^{®} STS (all from Cray Valley); under the trade name of Escorez^{®} 1000 series, Escorez^{®} 2000 series, and Escorez^{®} 5000 series (all from Exxon Mobile Chemical); under the trade name of Novares^{®} T series, Novares^{®} TT series, Novares^{®} TD series, Novares^{®} TL series, Novares^{®} TN series, Novares^{®} TK series, and Novares^{®} TV series (all from Rain Carbon); and under the trade name of Kristalex^{®}, Plastolyn^{®}, Piccotex^{®}, Piccolastic^{®} and Endex^{®} (all from Eastman Chemicals).

Suitable cross-linking agents **CA** include multifunctional acrylates such as selected from the group consisting of butanediol di(meth)acrylate, ethyleneglycol di(meth)acrylate, diethyleneglycol di(meth)acrylate, triethyleneglycol di(meth)acrylate, trimethylolpropane trimethacrylate, hexanediol diacrylate, trimethylolpropane triacrylate, and tripropyleneglycol diacrylate, trimethylolpropane ethoxy triacrylate, trimethylolpropane triacrylate, tripropylene glycol diacrylate, propylene glycol di(meth)acrylate, dipropylene glycol diacrylate, dipentaerythritol hydroxy pentaacrylate, neopentyl glycol propoxylate diacrylate, bisphenol A ethoxylate di(meth)acrylate, alkoxylated hexanediol diacrylate, ethoxylated bisphenol A diacrylate, ethoxylated bisphenol A di(meth)acrylate, ethoxylated trimethylolpropane triacrylate, propoxylated neopentyl glycol diacrylate, propoxylated glyceryl triacrylate, and polybutadiene di(meth)acrylate.

Suitable compounds for use as the at least one photoinitiator **PI** include free radical photo initiators and cationic photo initiators, especially free radical photo initiators. Suitable compounds for use as photoinitiators include, for example, benzoic ethers, dialkoxyacetophenones, alpha-hydroxycyclohexyl aryl ketones, alphaketophenylacetate esters, benzyldialkylketals, chloro- and alkylthioxanthones and alpha-amino- and alpha-hydroxyalkyl aryl ketones.

Selection of the type of the at least one photoinitiator depends mainly on the wavelength of the electromagnetic radiation used for curing of the adhesive.

Suitable photoinitiators showing absorption in the UVA-1 irradiation wavelength range include so called Norrish type I initiators as well as some Norrish type II initiators.

Especially suitable Norrish type I photoinitiators include phospine oxides (PO), such as diphenyl(2,4,6-trimethylbenzoyl)phosphine oxide (TPO), ethyl phenyl(2,4,6-trimethylbenzoyl) phosphinate (TPO-L), phenylbis(2,4,6-trimethylbenzoyl)phosphine oxide (BAPO), bis-(2,6-dimethoxybenzoyl)-2,4,4-trimethylpentylphosphine oxide (BAPO-1), 2-benzyl-2-(dimethylamino)-4-morpholino-butyrophenone (BDMB), and phenyl-bis-(2,4,6-trimethylbenzoyl) phosphine oxide (BAPO-2). These are commercially available, for example, under the trade name of Omnirad (from IGM Resins), Genocure (from Rahn AG), Speedcure (from Lambson (part of Arkema), Songcure (from Songwon), and Photoinitiators from Bodo Möller Chemie.

Suitable Norrish type II photoinitiators include thiozanthones (TX), for example, 2-Isopropylthioxanthone (ITX), thioxanthone-anthracene (TX-A), 2,4-diethylthioxanthone (DETX), 2-Chlorothioxanthone (CTX), 2,4-Dimethylthioxanthone (RTX), 2,4-diisopropylthioxanthone (DITX), 1-Chloro-4-propoxythioxanthone (CPTX); polymeric TXs such as polymeric CPTX, polyTHF-di(thioxanthone-2-oxyacetate); and dlcamphorquinine 2,3-bornanedione (CQ). These are commercially available, for example, under the trade names of Genocure^{®} (from Rahn GmbH), Omnirad^{®} (from IGM resins), and SpeedCure^{®} (from Lambson).

Furthermore, the photoinitiators may be used in combination with synergists /activators that are well known to skilled person. The preferred type of the synergist depends on the type of the photoinitiator, for example the radical formation with Norrish type II initiators requires a hydrogen donor as a synergist. Examples of suitable synergists for the Norrish II initiators include, for example, amino benzoates, acrylated amines, and thiol compounds.

Still further UV-curable acrylic pressure sensitive adhesive compositions include UV-curable acrylic syrup pressure sensitive adhesive compositions comprising:
- at least 35 wt.-%, preferably at least 50 wt.-%, of the at least acrylic monomer **AM,**
- 0 - 30 wt.-%, preferably 5-20 wt.-%, of the at least one tackifying resin **TR,**
- 0 - 5 wt.-%, preferably 0.01 - 1 wt.-%, of the at least one cross-linking agent **CA,** and
- 0.1 - 5 wt.-%, preferably 0.25 - 2.5 wt.-%, of the at least one photoinitiator PI, all proportions being based on the total weight of the UV-curable acrylic syrup pressure sensitive adhesive composition.

Suitable UV-curable acrylic syrup pressure sensitive adhesive compositions and preparation methods therefore have been disclosed, for example, in WO 2022180011 A1.

Another aspect of the present invention is a waterproofed substrate obtained by using the method for waterproofing a substrate of the present invention.

The substrate may be a roof substrate, particularly a roof deck, a roof cover plate, a parapet wall, or a membrane, particularly a bitumen- or EPDM-based membrane, especially as a roofing membrane or a roof flashing membrane.

## Claims

1. A method for waterproofing a surface of a substrate comprising steps of:
I) Applying an epoxy resin layer to at least a portion of the surface of the substrate,
II) Applying a sealing element comprising a polymeric waterproofing layer to the surface of the substrate such that the sealing element also covers the epoxy resin layer,
wherein at least a portion of the surface of the substrate covered with the epoxy resin layer contains bitumen- and/or ethylene propylene diene monomer (EPDM)- based material.

2. The method according to claim 1, wherein the substrate to be waterproofed is a roof substrate, preferably selected from a roof deck, an insulation board, a roof cover plate, a parapet wall, a roofing membrane, and a roof flashing membrane.

3. The method according to claim 1 or 2, wherein step II) is conducted such that the sealing element becomes adhesively adhered to the surface of the substrate.

4. The method according to any one of previous claims, wherein the epoxy resin layer is obtained by coating an epoxy resin composition comprising:
A) At least one liquid epoxy resin and
B) At least one amine hardener.

5. The method according to any one of previous claims, wherein the polymeric waterproofing layer comprises at least one polymer selected from polyvinylchloride, polyolefins, halogenated polyolefins, rubbers, and ketone ethyl esters.

6. The method according to any one of previous claims, wherein the waterproofing layer is a polyvinylchloride-based layer, preferably comprising:
a) 25 - 65 wt.-% of a polyvinylchloride resin as the at least one polymer,
b) 10- 50 wt.-% of at least one plasticizer, and
c) 0-60 wt.-% of at least one inorganic filler, all proportions being based on the total weight of the polymeric waterproofing layer.

7. The method according to any one of previous claims, wherein the polymeric waterproofing layer has a thickness of 0.35 - 3.5 mm, preferably 0.5 - 2.5 mm.

8. The method according to any one of previous claims, wherein the polymeric waterproofing layer has a width of 0.35 - 3.5 m, preferably 0.5 - 3 m.

9. The method according to any one of previous claims, wherein the sealing element is a roofing membrane or a roof flashing membrane.

10. The method according to any one of previous claims, wherein the sealing element is a self-adhering sealing element comprising the polymeric waterproofing layer and a pressure sensitive adhesive layer.

11. The method according to any one of claims 1-9 comprising further steps, which are conducted after step I) and before step II), the further steps including:
- providing an adhesive element comprising a pressure sensitive adhesive layer having first and second primary exterior surfaces and a release liner covering the second primary exterior surface of the pressure sensitive adhesive layer and
- applying the adhesive element to the surface of the substrate such that the pressure sensitive adhesive layer also covers the epoxy resin layer, and
- removing the release liner from the adhesive element.

12. The method according to claim 10 or 11, wherein the pressure sensitive adhesive layer is a dried layer of a water- or solvent-based acrylic pressure sensitive adhesive composition or a cured layer of an actinic radiation or electron beam curable acrylic pressure sensitive adhesive composition.

13. The method according to any one of claims 10-12, wherein the pressure sensitive adhesive layer has a mass per unit area of 50 - 500 g/m², preferably 100 - 350 g/m².

14. The method according to any one of claims 1-9 comprising further steps, which are conducted after step I) and before step II), the further steps including:
- applying a first layer of an adhesive composition to the surface of the substrate and
- optionally applying a second layer of the adhesive composition to a surface of the polymeric waterproofing layer, wherein the first adhesive layer also covers the epoxy resin layer.

15. The method according to claim 14, wherein the adhesive composition is a solvent- or water-based adhesive composition or a reactive adhesive composition, preferably selected from one- and two-component epoxide, acrylic, and polyurethane adhesive compositions.

16. A waterproofed substrate obtained by using the method according to any one of previous claims.
